(19) Europäisches Patentamt / European Patent Office / Office européen des brevets

(11) **EP 2 169 263 B1**

(12) **EUROPEAN PATENT SPECIFICATION**

| | |
|---|---|
| (45) Date of publication and mention of the grant of the patent:<br>**26.10.2011 Bulletin 2011/43** | (51) Int Cl.:<br>**F16H 1/32** (2006.01) |
| (21) Application number: **08764624.6** | (86) International application number:<br>**PCT/JP2008/059578** |
| (22) Date of filing: **23.05.2008** | (87) International publication number:<br>**WO 2008/149696 (11.12.2008 Gazette 2008/50)** |

(54) **REDUCTION GEAR DEVICE WITH MOTORS, AND INDUSTRIAL MACHINE**

UNTERSETZUNGSGETRIEBEEINHEIT MIT MOTOREN UND INDUSTRIEMASCHINE

DISPOSITIF DÉMULTIPLICATEUR AVEC DES MOTEURS, ET MACHINE INDUSTRIELLE

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR** | (72) Inventor: **WANG, Hongyou**<br>**Tokyo105-0022 (JP)** |
| (30) Priority: **01.06.2007 JP 2007147223** | (74) Representative: **Vossius & Partner**<br>**Siebertstrasse 4**<br>**81675 München (DE)** |
| (43) Date of publication of application:<br>**31.03.2010 Bulletin 2010/13** | (56) References cited:<br>**JP-A- 01 261 537    JP-A- 08 226 498**<br>**JP-A- 2006 046 664    JP-A- 2006 132 651**<br>**JP-A- 2007 085 530    JP-U- 02 041 748**<br>**JP-U- 63 103 035** |
| (73) Proprietor: **Nabtesco Corporation**<br>**Tokyo (JP)** | |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

The present invention relates to a motored reduction gear transmission according to the preamble of claim 1 and as it is disclosed in JP 2006046664 A. The present invention also relates to an industrial machine utilizing this motored reduction gear transmission.

Background Art

In a swing device or the like of an industrial machine, there are cases in which wiring, tubing, etc. are to be arranged from a device fixed to a base side to a device fixed to a swing side. Since a swing part rotates with respect to a base, it is preferred that the wiring, tubing, etc. are arranged along an axis line (a rotation axis line) of a swing shaft to prevent twisting or cutting of the wiring, tubing, etc. The swing device may, e.g., be a robot joint. A motored reduction gear transmission may be needed as a driving part of the swing device, etc., of a robot. This motored reduction gear transmission comprises the through hole encompassing the axis line of the output part of the reduction gear unit and passing from the base side to the output side of the reduction gear unit. The motored reduction gear transmission comprising this type of through hole is taught in JP08226498 A (Patent Document 1).
The motored reduction gear transmission taught in Patent Document 1 comprises the motor and the reduction gear unit. The reduction gear unit comprises an internal gear, an external gear, and a crankshaft. The internal gear has a ring shape. The number of teeth in the external gear differs from the number of teeth in the internal gear. The external gear rotates eccentrically while meshing with the internal gear at inside of the internal gear. A first through hole is formed at a center of the external gear, and a plurality of second through holes is formed around the periphery of the first through hole. The crankshaft comprises an eccentric body offset from an axis line of the crankshaft. A plurality of crankshafts is present, and each of the eccentric bodies engages with the corresponding second through hole of the external gear.

In the reduction gear unit taught in Patent Document 1, the center through hole encompasses the axis line of the internal gear and passes from the base side to the output side. Since the first through hole is formed at the center of the external gear, the center through hole can be formed such that it passes from the base side to the output side of the reduction gear unit. In the present specification, the internal gear of the reduction gear unit may also be termed an output part, and a member fixed to the reduction gear unit may be termed a base. That is, "an output side of the reduction gear unit" refers to a side having a member rotated by the reduction gear unit attached thereto, and "a base side of the reduction gear unit" refers to a side having a member to which the reduction gear unit is attached. Moreover, a member that rotates with respect to the internal gear may be termed a fixed part. The terms "output part" and "fixed part" are simply terms to differentiate the two parts that rotate relative to one another in the reduction gear unit, and the technique taught in the present specification is established regardless of whether the internal gear is called the "fixed part" and the member that rotates with respect to the internal gear is called the "output part".

In the motored reduction gear transmission taught in Patent Document 1, an output shaft of a motor is connected to one of the crankshafts, and a detector for detecting the rotation angle of the shaft is connected to another one of the crankshafts. The motor and the detector are disposed so that their outer peripheries are located outside a cylinder shaped area extending from the center through hole of the reduction gear unit along an axial direction of the center through hole. In the motored reduction gear transmission, when the external gear revolves (rotates eccentrically) once around an axis line of the internal gear, the internal gear rotates by an angle equivalent to the difference in the number of teeth between the internal gear and the external gear.
In the motored reduction gear transmission taught in Patent Document 1, the center through hole is formed in the reduction gear unit, and consequently wiring, tubing, etc. can pass through the center through hole. Consequently, wiring, tubing, etc. can pass from the base side to the output side along the axis line of the output part of the reduction gear unit.

Disclosure of Invention

Problem to be Solved by the Invention

High torque is often required in motored reduction gear transmissions. A high torque output motor may be utilized to increase the torque of the output of the reduction gear unit. However, in conventional motored reduction gear transmissions, there is a tradeoff between the internal diameter of the center through hole and the output of the motor that can be adopted. Generally, the outer diameter increases as the output torque of the motor increases. Consequently, if the high torque output motor is adopted in the motored reduction gear transmission taught in Patent Document 1, an outer peripheral portion of the motor consequently covers a part of the center through hole. Consequently, the substantial size of the center through hole that can be used for the passage of wiring or piping is reduced.

Moreover, in the motored reduction gear transmission taught in Patent Document 1, only one of the crankshafts engaged with the second through holes of the external gear is driven by the motor. Consequently, the force transmitted from the crankshaft to the external gear varies along the circumferential direction of the external gear. This causes twisting (deformation) of the external gear, and a decrease in the accuracy of torque transmission between the motor and the external gear. Response and rotational accuracy as an actuator (motored reduction gear transmission) consequently may decrease.

The present invention has been created taking the above problems into consideration. The present invention aims to present a motored reduction gear transmission capable of outputting high torque with precision while having a through hole encompassing an axis line of an output part and passing from a base side to an output side.

Means to Solve the Problem

The present invention utilizes a plurality of motors in order to realize high precision and high torque. By utilizing the plurality of motors, a motored reduction gear transmission is realized that can output high torque with fine precision, and that can ensure an internal diameter large enough for wiring and tubing to pass through a center through hole of a reduction gear unit.

The motored reduction gear transmission of the present invention comprises the features of claim 1. The reduction gear unit comprises an internal gear, an external gear, and a plurality of crankshafts. The internal gear has a ring shape, and has a different number of teeth than a number of teeth of the external gear. The external gear is configured to rotate eccentrically around an axis line of the internal gear while meshing with the inside of the internal gear. Here, the "eccentric rotation of the external gear" means that a center of the external gear revolves around the axis line of the internal gear. Further, since the number of teeth of the external gear differs from the number of teeth of the internal gear, the external gear can rotate with respect to the internal gear while revolving around the axis line of the internal gear. That is, when the external gear rotates eccentrically around the axis line of the internal gear, the external gear and the internal gear rotate relative to one another. Further, the external gear has a first through hole at its center, and a plurality of second through holes formed around the first through hole. Each of the second through holes may be formed on the same circumference. Each crankshaft has an eccentric body offset from an axis line of the crankshaft, and each of the eccentric bodies is engaged with a respective second through hole.

Further, the reduction gear unit has a center through hole passing from a base side to an output side of the reduction gear unit. Further, the center through hole encompasses the axis line of the internal gear. Since the internal gear has a ring shape and the first through hole is formed at the center of the external gear, it is possible to form the center through hole in the reduction gear unit. Moreover, "the center through hole encompassing the axis line of the internal gear" means that the axis line of the internal gear passes through the center through hole. A center axis of the center through hole does not necessarily coincide with the axis line of the internal gear.

Each of the plurality of motors has an output shaft connected to corresponding one of the plurality of crankshafts, and is disposed so that an outer periphery of each motor is disposed outside a cylinder shaped area extending from the center through hole of the reduction gear unit along an axial direction of the center through hole.

In the motored reduction gear transmission, the motors are disposed so that the outer periphery of each motor is disposed outside the cylinder shaped area extending along the center through hole. As a result, wiring, tubing, etc. can be arranged, without interfering with the motor, through the center of the internal gear (output part) of the reduction gear unit from the base side to the output side of the reduction gear unit. Consequently, it is possible to prevent the wiring, tubing, etc. from making contact with the motor and being disconnected, etc.

Preferably, the output shaft of the motor may be connected directly to the crankshaft. Since a gear is not needed between the crankshaft and the output shaft of the motor, backlash does not occur between the crankshaft and the output shaft of the motor.

Further, a corresponding motor may be connected to each of the crankshafts. That is, the same number of motors may be provided as the number of crankshafts. This type of motored reduction gear transmission can output a large torque without increasing the size of the motor. Further, the size of each motor can be reduced by increasing the number thereof, and the motored reduction gear transmission can be made compact.

In the motored reduction gear transmission of the present invention, preferably, an angle detector that detects a rotation angle of the motor may be connected to at least one of the plurality of motors, and any angle detector may not be connected to at least another one of the plurality of motors.

Although the aforesaid motored reduction gear transmission comprises a plurality of motors, the physical value that is the ultimate object of control is the rotation angle (or rotation angle velocity) of the internal gear that constitutes the output part. All the motors engage with the internal gear via the crankshaft and the external gear. Consequently, if the rotation angle of at least one of the motors is detected, the rotation angle of the internal gear can be obtained. Therefore, not all the motors need to be each provided with an angle detector. Further, at least another one of the motors does not connect to any angle detector. Consequently, a member other than the angle detector (e.g. a brake, etc.) can be connected to at least one of the motors without essentially increasing the size of the motored reduction gear transmission.

In the motored reduction gear transmission of the present invention, the plurality of motors (preferably all the motors) may preferably be driven by a same single torque command signal that is output from one motor-controller. In other words, the motored reduction gear transmission may comprise one motor-controller that controls the plurality of motors using the same torque command value.

In the motored reduction gear transmission described above, there is no need to provide the same number of motor-controllers as the number of motors. Since the motored reduction gear transmission can be driven with a minimum number of motor-controllers, cost can be reduced. Further, if the angle detector is connected to each of the plurality of motors and each of the motors is controlled independently, the torque command signals between the motors readily interfere with one another, and the torque command signal readily oscillates. In the motored reduction gear transmission of the present invention, the angle detector and the motor-controller can be optimized using the characteristics of the reduction gear unit. That is, the motored reduction gear transmission can solve the problems which may occur upon using the plurality of motors, by always applying the same current (torque command signal) to all of the motors while using one angle detector and one motor-controller.

In the motored reduction gear transmission of the present invention, preferably, all of the plurality of motors may have the same torque characteristics.

According to the motored reduction gear transmission, the same torque command signal is input to the motors having the same torque characteristics. The torque of all the motors is transmitted to one external gear. Consequently, if the load applied to the motors varies for some reason, the speed of the external gear is increased by the motor with the smaller load, and consequently the load applied from the external gear to the motor with a larger load decrease. Consequently, the load applied to the motors is distributed uniformly, and the rotational balance of the external gear is maintained satisfactorily.

In the motored reduction gear transmission of the present invention, a brake may be connected only to the motor that does not connect to any angle detector among the plurality of motors.

According to the motored reduction gear transmission, operation of the brake allows the rotation angle of the output part of the reduction gear unit (the internal gear) to be controlled more accurately, and allows the output part to be operated intermittently. Further, since the brake is connected only to the motor that does not connect to any angle detector, the motored reduction gear transmission can be made more compact than in the case where the motor connecting to the angle detector also connects to the brake.

In the motored reduction gear transmission of the present invention, the outer diameter of each of the motors may have a size whereby the motor can be positioned within the cylinder shaped area extending from the internal gear along an axial direction of the internal gear (a direction parallel to the axis line of the internal gear). In other words, each of the plurality of motors may be disposed such that its outer periphery is within the cylinder shaped area extending from the internal gear.

According to the aforesaid motored reduction gear transmission, when the motored reduction gear transmission is viewed from a plan view along its axial direction, the outer diameter of the motors is not positioned outside the outer diameter of the internal gear (i.e., the outer diameter of the reduction gear unit). The outer diameter dimension of the entire reduction gear transmission including the motor can be made identical to the outer diameter dimension of a single reduction gear unit with the motor excluded. The entire reduction gear transmission including the motor can be housed in a hollow case having an internal diameter needed for housing the reduction gear unit excluding the motor. High torque can be obtained without increasing the space occupied by the motored reduction gear transmission.

In the motored reduction gear transmission of the present invention, the motored reduction gear transmission may preferably satisfy the following equation (1):

$$0.2 \leq d/D \leq 0.5 \qquad (1)$$

where d is an internal diameter of the center through hole, and D is an outer diameter of the internal gear.

A large device is frequently attached to an output part of a large reduction gear unit. Consequently, as the size of the reduction gear unit increases, the size of the wiring, tubing, etc. to be passed through the reduction gear unit also increases. The size occupied by this wiring, tubing, etc. may be approximately 20% of the outer diameter of the reduction gear unit (internal gear). Therefore, if the internal diameter d of the center through hole and the outer diameter D of the internal gear have the relationship d/D < 0.2, the wiring, tubing, etc. might be unable to pass through the reduction gear unit. Further, a small diameter motor cannot output a large torque. In order to drive the reduction gear unit adequately, it is generally undesirable to use a motor having an outer diameter less than approximately 25% of the outer diameter of the reduction gear unit. In order to output sufficient torque to drive the reduction gear unit adequately, a motor having an outer diameter of approximately 25% or more of the outer diameter of the reduction gear unit is preferred. That is, if the internal diameter d of the center through hole and the outer diameter D of the internal gear have the relationship d/D > 0.5, the space for disposing the motor becomes narrower; and a motor whose outer diameter is approximately 25% or more of the outer diameter of the reduction gear unit cannot be disposed. Consequently, it may be impossible to drive the reduction gear unit adequately. Further, since the parts constituting the reduction gear unit must be made extremely compact, the interior of the reduction gear unit, particularly the surroundings of the crankshaft, become difficult to design. By having the internal diameter d of the center through hole and the outer diameter D of the internal gear satisfy the equation (1), sufficient space is ensured for the passage of the wiring, tubing, etc. from the base side to the output side of the reduction gear unit, and a motor can be adopted having a size capable of outputting torque for driving the reduction gear unit adequately.

The present invention also teaches an industrial machine utilizing the motored reduction gear transmission. A swing part of the industrial machine is driven by the motored reduction gear transmission.
A multi-joint robot needs wiring, etc. to pass therethrough, and to be operated accurately. Consequently, if a large motor is adopted so as to obtain high torque, the inertia of the motor may vibrate the multi-joint robot. It then becomes difficult to operate the multi-joint robot accurately when a large motor is disposed in a joint. The aforementioned motored reduction gear transmission can obtain high torque without adopting a large motor. Since the inertia of the motor can be made consequently small, the multi-joint robot can be operated accurately. The motored reduction gear transmission may drive a wrist joint of the multi-joint robot. In other words, the motored reduction gear transmission may be disposed in the wrist joint of the multi-joint robot.

Effect of the Invention

The motored reduction gear transmission of the present invention is capable of outputting high torque with high precision, this motored reduction gear transmission having the through hole encompassing the axis line of the output part of the reduction gear unit and passing from the base side to the output side of the reduction gear unit.

Brief Description of the Drawings

FIG. 1 shows a cross-sectional view (1) of a motored reduction gear transmission of a first embodiment.
FIG. 2 shows a cross-sectional view along the line II- II of FIG. 1.
FIG. 3 shows a cross-sectional view (2) of the motored reduction gear transmission of the first embodiment.
FIG. 4 shows a control circuit of a motor.
FIG. 5 shows a partial cross-sectional view of an industrial machine of a second embodiment.
FIG. 6 shows a partial cross-sectional view of an industrial machine of a third embodiment.
FIG. 7 shows a plan view from the direction of the arrow A in FIG. 6.

Best Mode for Carrying Out the Invention

Some features of the preferred embodiments are described below.

(First feature) A rotor of a motor is fixed to a shaft of a crankshaft.
(Second feature) An output part of a reduction gear unit is an internal gear. When a center of an external gear revolves around an axis line of the internal gear, i.e., when the external gear rotates eccentrically around the axis line of the internal gear, the internal gear rotates with respect to a base.

Preferred Embodiments

Embodiments will be described with reference to the figures.

(First Embodiment)

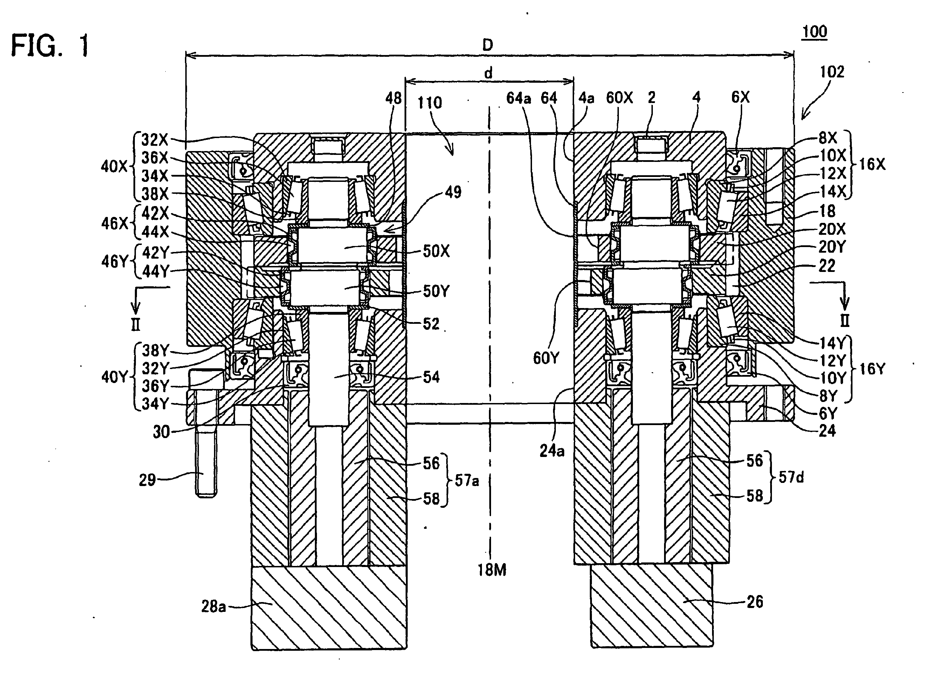

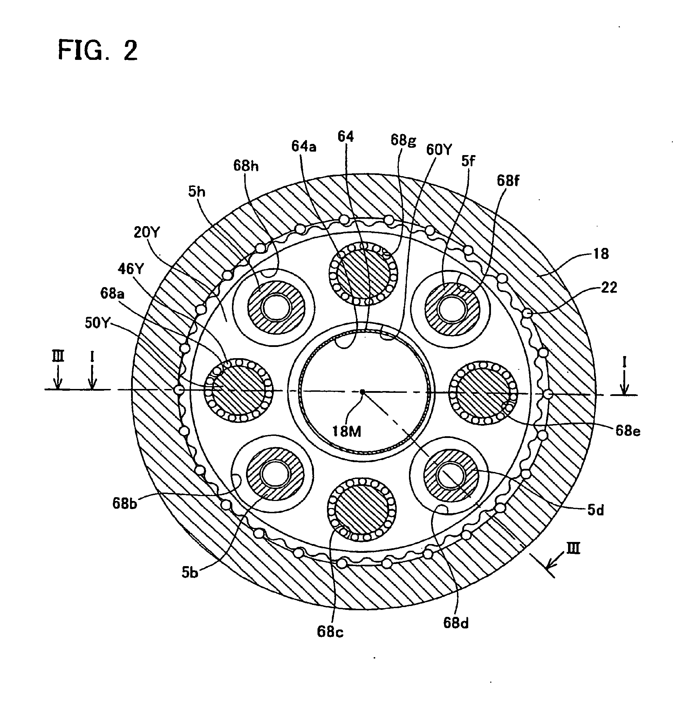

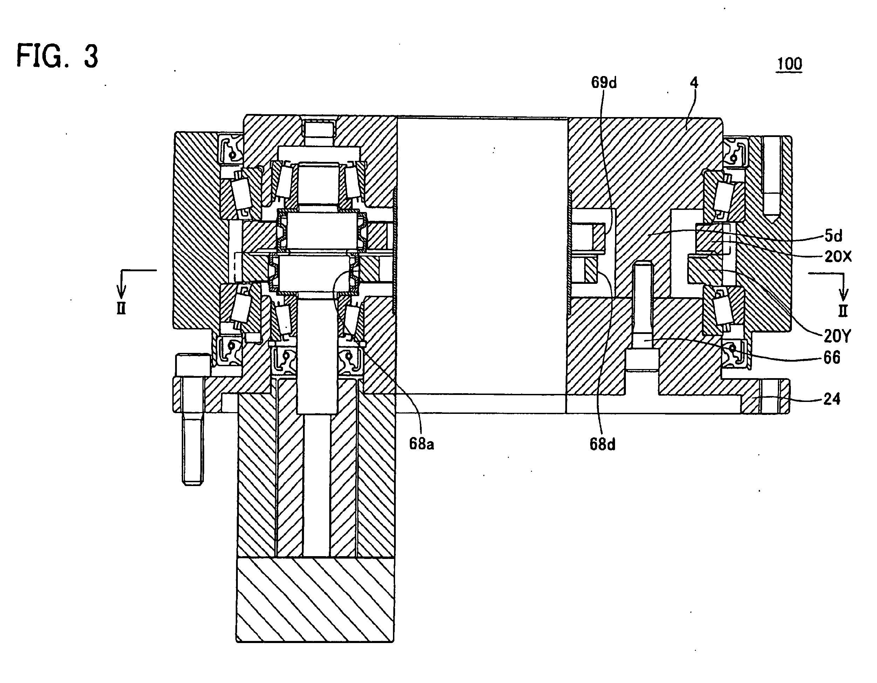

FIG. 1 shows a cross-sectional view of a motored reduction gear transmission 100 of the present embodiment. FIG. 2 shows a cross-sectional view along the line II-II of FIG. 1. FIG. 3 shows a cross-sectional view of a different part of the motored reduction gear transmission 100. The cross-sectional view of FIG. 1 is equivalent to the part along the line I-I of FIG. 2, and the cross-sectional view of FIG. 3 is equivalent to the part along the line III- III of FIG. 2. For clarity, reference numbers are added only in specific locations in the cross-sectional view of FIG. 3, and reference numbers for components that are essentially identical with FIG. 1 are omitted.

As shown in FIG. 1, the motored reduction gear transmission 100 comprises a reduction gear unit 102 and a plurality of motors 57a~57d. Only the motors 57a and 57d are shown in FIG. 1, and the other motors 57b, 57c are omitted.

The reduction gear unit 102 comprises an internal gear 18, external gears 20X, 20Y, a plurality of crankshafts 49, and a cylindrical member 64. As described below, the internal gear 18 may also be termed an output part of the reduction gear unit 102. A portion supporting the internal gear 18 rotatably may be termed a fixed part. Specifically, a carrier (a carrier upper part 4 and a carrier base 24; to be described below in detail) is equivalent to the fixed part of the reduction gear unit 102. Moreover, in the following description, when common phenomena are described for a plurality of essentially the same type of components, the letters added to the reference numbers thereof may be omitted.

As shown in FIG. 2, the internal gear 18 has a ring shape. The internal gear 18 has a different number of teeth from those of the external gear 20. The external gear 20 rotates eccentrically around an axis line 18M of the internal gear 18 while meshing with inner gear pins 22 of the internal gear 18. That is, a center of the external gear 20 revolves around the axis line 18M of the internal gear 18. A first through hole 60 is formed in a central part of the external gear 20, and a cylindrical member 64 passes through the first through hole 60 (see also FIG. 1). A plurality of second through holes 68a~68h is formed around the first through hole 60 of the external gear 20. Each of the second through holes 68 is formed on the same circumference. As described later, eccentric bodies 50 of the crankshafts 49 engage with the second through holes 68a, 68c, 68e, 68g, and columnar parts 5 of the carrier upper part 4 pass through the second through holes 68b, 68d, 68f, 68h.

As shown in FIG. 1, the crankshaft 49 comprises a shaft 54 and the eccentric bodies 50X, 50Y. The eccentric bodies 50X, 50Y are offset from an axis line of the shaft 54. The eccentric bodies 50 are engaged with the second through holes 68a, 68c, 68e, 68g (see FIG. 2) via needle roller bearings 46. Moreover, in the needle roller bearing 46, the reference number 44 shows a roller, and the reference number 42 shows a retainer for retaining the rollers 44.

The reference number 4 shows the carrier upper part, and the reference number 24 shows the carrier base. The carrier upper part 4 and the carrier base 24 are fastened by a bolt 66, and together constitute a carrier of the reduction gear unit 102 (see FIG. 3). In the motored reduction gear transmission 100, the carrier base 24 is fixed to a base (e.g., a base of a swing part of the robot, a base of a rotation device, etc.) by a bolt 29. That is, the rotation of the carrier (the carrier upper part 4 and the carrier base 24) with respect to the base is restrained. Consequently, the rotation of the external gears 20X, 20Y with respect to the base is constrained. As described above, the internal gear 18 rotates with respect to the external gears 20X, 20Y. Consequently, the carrier (the carrier upper part 4 and the carrier base 24) corresponds to a fixed part of the reduction gear unit 102. The internal gear 18 corresponds to an output part that rotates with respect to the fixed part (the carrier upper part 4 and the carrier base 24) of the reduction gear unit 102.

As shown in FIG. 3, the columnar part 5d of the carrier upper part 4 passes through the second through hole 69d of the external gear 20X and the second through hole 68d of the external gear 20Y. As shown in FIG. 2, the carrier upper part 4 has a plurality of columnar parts 5b, 5d, 5f, 5h, these passing respectively through the corresponding second through holes 68b, 68d, 68f, 68h. Although not shown, the columnar parts 5b, 5d, 5f, 5h also pass through the corresponding second through holes 69b, 69d, 69f, 69h of the external gear 20X (see also FIG. 3).

A space is ensured between the columnar parts 5b, 5d, 5f, 5h and the second through holes 68b, 68d, 68f, 68h of the external gear 20Y to allow the external gear 20Y to rotate eccentrically around the axis line 18M of the internal gear 18. Similarly, a space is ensured between the second through holes 69 of the external gear 20X and the columnar parts 5 corresponding to the second through holes 69 to allow the external gear 20X to rotate eccentrically around the axis line 18M of the internal gear 18.

As shown in FIG. 1, a pair of tapered roller bearings 16X, 16Y are disposed between the carrier (the carrier upper part 4 and the carrier base 24) and the internal gear 18. The internal gear 18 is supported by the tapered roller bearings 16X, 16Y so as to be rotatable with respect to the carrier and incapable of moving in a thrust direction. Although the pair of tapered roller bearings is disposed between the carrier and the internal gear 18 in the present embodiment, angular ball bearings may be utilized instead of the tapered roller bearings.

A pair of tapered roller bearings 40X, 40Y is disposed between the carrier and the crankshaft 49. The crankshaft 49 is supported by the tapered roller bearings 40X, 40Y so as to be rotatable with respect to the carrier and incapable of moving in a thrust direction. In the tapered roller bearing 16, the reference number 8 shows an inner race, the reference number 14 shows an outer race, the reference number 12 shows a roller, and the reference number 10 shows a retainer for retaining the rollers 12. In the tapered roller bearing 40, the reference number 38 shows an inner race, the reference number 32 shows an outer race, the reference number 36 shows a roller, and the reference number 34 shows a retainer for retaining the rollers 36.

As described above, the crankshafts 49 have the eccentric bodies 50 (the eccentric bodies 50X, 50Y). The eccentric bodies 50Y engage with the second through holes 68a, 68c, 68e, 68g (see FIG. 2) of the external gear 20Y via the needle roller bearings 46Y. Therefore, the eccentric bodies 50Y can rotate within the second through holes 68a, 68c, 68e, 68g. Similarly, the eccentric bodies 50X engage with the second through holes of the external gear 50X.

Stopping members 48 are disposed between each of the eccentric bodies 50X and the tapered roller bearings 40X, and stopping members 52 are disposed between each of the eccentric bodies 50Y and the tapered roller bearings 40Y. The stopping members 48, 52 prevent the eccentric bodies 50X, 50Y from moving in the axial direction of the shaft 54.

In the crankshaft 49, axis lines of each of the eccentric bodies 50X, 50Y are offset from the axis line of the shaft 54. The eccentric bodies 50X, 50Y are offset in opposite directions. That is, the axis lines of the eccentric body 50X and of the eccentric body 50Y are positioned on opposing sides with the axis line of the shaft 54 therebetween. That is, the external gear 20X and the external gear 20Y are positioned symmetrically with respect to the axis line 18M of the internal gear 18. Consequently, the rotational balance of the reduction gear unit 102 is achieved.

A center hole 4a passes through a center of the carrier upper part 4. A center hole 24a passes through a center of the carrier base 24. The cylindrical member 64 passes through both the first through holes 60X, 60Y of the external gears 20X, 20Y respectively, and connects the center hole 4a of the carrier upper part 4 and the center hole 24a of the carrier base 24. A center through hole 110 is formed in the reduction gear unit 102 by the center hole 4a of the carrier upper part 4, the center hole 24a of the carrier base 24, and an inner circumference surface 64a of the cylindrical member 64. This center through hole 110 encompasses the axis line 18M of the internal gear 18 (output part) and penetrates from the base side to the output side (the side having a member rotated by the internal gear 18) of the reduction gear unit 102. The center through hole 110 including therein the axis line of the output part and communicating from the base side to the output side is formed in the reduction gear unit 102 because the internal gear 18 is formed in a ring shape, and the first through holes 60X, 60Y are formed in the central parts of the external gears 20X, 20Y that rotate eccentrically within the internal gear 18.

The internal diameter of the center hole 4a of the carrier upper part 4, the internal diameter of the center hole 24a of the carrier base 24, and the diameter of the inner circumference surface 64a of the cylindrical member 64 are identical, and their value is represented by d.

Next, the terms "fixed part" and "output part" of the reduction gear unit 102 will be described. As will be described later, in the motored reduction gear transmission 100, a motor 57 is fixed to the carrier base 24. When a rotor 56 of the motor 57 rotates, the internal gear 18 rotates relative to the carrier (the carrier upper part 4 and the carrier base 24) and the motor 57. In the present embodiment, the carrier corresponds to a body of the reduction gear unit 102. Consequently, the internal gear 18 is termed the output part of the reduction gear unit 102, and the carrier is termed the fixed part of the reduction gear unit 102.

A pair of oil seals 6X, 6Y is disposed between the carrier (the carrier upper part 4 and the carrier base 24) and the internal gear 18. An oil seal 30 is disposed between the carrier base 24 and the shaft 54 of each crankshaft 49. A seal cap 2 is disposed above the carrier upper part 4. Oil inserted into the reduction gear unit 102 is prevented from leaking to the exterior by the oil seals 6X, 6Y, 30 and the seal cap 2.

Next, the plurality of motors 57 will be described.

Each of the motors 57 comprises a stator 58 and the rotor 56 (the output shaft of the motor). The rotor 56 is connected to the shaft 54 of the crankshaft 49. The motored reduction gear transmission 100 comprises four crankshafts 49, and each crankshaft 49 has one corresponding motor 57 connected thereto.

The motors 57 are disposed such that their respective outer periphery positions outside of a cylinder shaped area extending from the center through hole 110 of the reduction gear unit 102 along the axial direction of the center through hole 110. By disposing the motors 57 in this manner, wiring, tubing, etc. (not shown) can pass through the center through hole 110 of the reduction gear unit 102 without interfering with any of the motors 57.

The stator 58 is each fixed to the carrier base 24, and the rotor 56 connects to the shaft 54 of the crankshaft 49. The rotor 56 each rotates around an axis line of the stator 58. When the rotor 56 rotates, the shaft 54 rotates integrally with the rotor 56. The shaft 54 of the crankshaft 49 supported by the carrier also serves as the output shaft of the motor 57. Consequently, the motor 57 does not need a bearing to support the rotor 56 with respect to the stator 58. Since the rotor 56 is connected to the shaft 54 of the crankshaft 49, the rotor 56 can rotate with respect to the stator 58, and the positional relationship of the rotor 56 and the stator 58 does not change in the axial direction.

Next, the mechanism of the motored reduction gear transmission 100 will be described.

When the rotor 56 of the motor 57 rotates and the crankshaft 49 rotates around the axis line of the shaft 54, the eccentric bodies 50 rotate eccentrically. In other words, the axis line of the eccentric body 50 revolves around the axis line of the shaft 54. When the eccentric body 50 rotates eccentrically, the external gear 20 rotates eccentrically around the axis line 18M of the internal gear 18. That is, the center of the external gear 20 revolves around the axis line 18M of the internal gear 18.

Since the external gear 20 and the internal gear 18 mesh, the internal gear 18 rotates relative to the external gear 20 when the external gear 20 revolves. As described above, since the rotation of the external gear 20 with respect to the fixed part (carrier) is constrained, the internal gear 18 rotates with respect to the fixed part (carrier).

As shown in FIG. 2, in the motored reduction gear transmission 100, the external gear 20 has fifty-one teeth, and the internal gear 18 has twenty-six teeth (twenty-six inner gear pins). Further, each tooth of the external gear 20 meshes with an alternate tooth of the inner gear pins 22. Consequently, when the external gear 20 revolves fifty-two times (26 x 2) around the axis line 18M, the internal gear 18 rotates once around the axis line 18M. Further, as is clear from FIG. 2, all the outer teeth of the external gear 20 make contact with the inner gear pins 22. A configuration is consequently realized in which backlash between the external gear 20 and the internal gear 18 does not occur readily. Further, as shown in FIG. 1, both the external gears 20X, 20Y mesh with one of the inner gear pins 22. This configuration reduces backlash between the external gear 20 and the internal gear 18. Moreover, the inner gear pins 22 are not fixed to the internal gear 18. The inner gear pins 22 fit into a groove formed in the internal gear 18, and can rotate within this groove.

Moreover, the reduction ratio of the motored reduction gear transmission 100 can be changed as appropriate by adjusting the number of teeth of the external gear 20 and of the internal gear 18 (the number of inner gear pins 22).

Next, the control method of the motor 57 will be described.

As shown in FIG. 1, an encoder (angle detector) 26 for detecting the rotation angle of the motor is connected to the motor 57d among the plurality of motors 57 (motors 57a-57d; the motors 57b and 57c are not shown in FIG. 1). The encoder 26 is not connected to the other three motors 57a-57c. Instead of the encoder 26, brakes 28a-28c are connected to the other three motors 57a-57c. In FIG. 1, the brake 28a connected to the motor 57a is shown. That is, the brakes 28 are connected only to the motors 57 to which the encoder 26 is not connected. Consequently, the motored reduction gear transmission 100 can be shortened in the axial direction than when the encoder 26 and the brake 28 are both connected to the motor 57. Moreover, all four motors 57a-57d have the same torque characteristics.

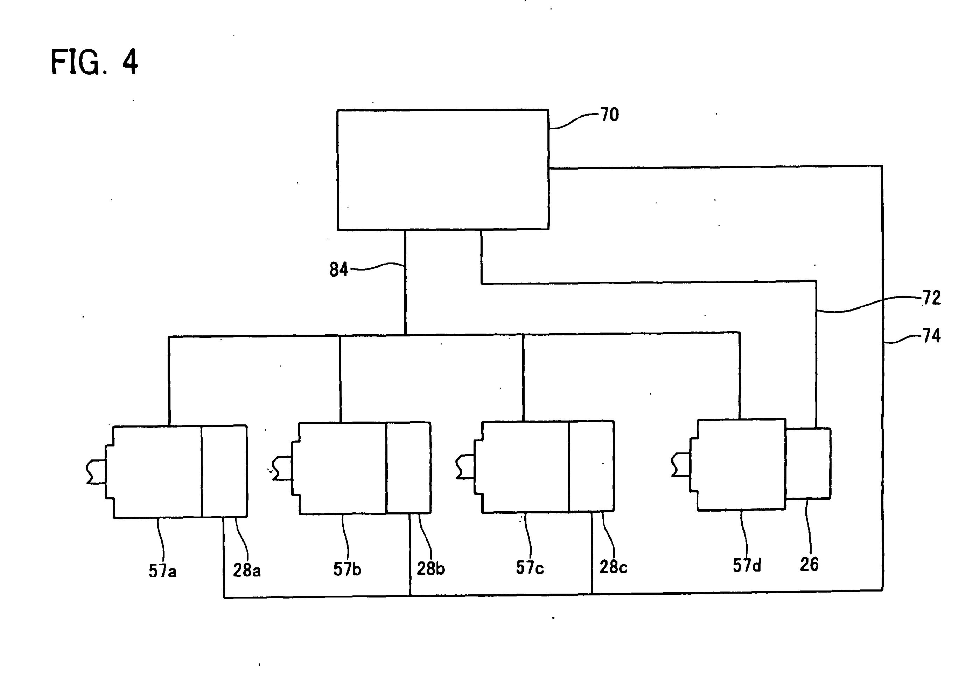

A control circuit of the four motors 57a-57d is shown in FIG. 4. The brakes 28a-28c are connected respectively to the motors 57a-57c. The encoder 26 is connected to the motor 57d. The reference number 70 shows a controller (motor-controller), and the rotation angle of the motor 57d detected by the encoder 26 is input to the controller 70 via connection 72. The same torque command signal output from the controller 70 is input to the motors 57a-57d via connection 84, and the same motor halting signal output from the controller 70 is input to the motors 57a-57d via connection 74. When the motors 57a-57d are assembled, the poles and winding of each are made to have the same phase. Consequently, the pole phase of the motors 57a-57d is synchronous.

In the motored reduction gear transmission 100, only the rotation angle of the motor 57d is detected, and the rotation angle of the internal gear 18 is calculated from the rotation angle of the motor 57d.

As described above, the eccentric bodies 50 of each of the crankshafts 49 engage with the respective second through holes 68a, 68c, 68e, 68g of the external gear 20Y. Further, the external gear 20 (the external gears 20X, 20Y) mesh with the internal gear 18. Consequently, the rotation angle of the internal gear 18, i.e., the output part of the reduction gear unit 102, can be obtained by detecting the rotation angle of any one of the motors 57. Although the motored reduction gear transmission 100 comprises the plurality of motors 57, the rotation angle of the output part (the internal gear 18) can be detected using a minimum number of encoders 26.

The motors 57a-57d are driven by the same torque command signal output from the controller 70. That is, the same torque is applied to all the crankshafts 49. The torque applied to all the crankshafts 49 is ultimately transmitted to the internal gear 18. Consequently, when the load applied to the motor 57a increases momentarily (e.g., the load applied to the crankshaft 49 connected to the motor 57a increases), the load applied to the motors 57b-57d decreases. Thereupon, the motors 57b-57d accelerate. Since this reduces the load applied to the motor 57a, the load applied to the motors 57a-57d becomes uniform. That is, even if the load applied to one of the crankshafts 49 increases momentarily, the load applied to the four crankshafts 49 ultimately becomes uniform. Consequently, the force transmitted from the crankshafts 49 to the external gear 20 along the circumferential direction of the external gear 20 becomes uniform. As a result, undesirable occurrences like twisting (deformation) of the external gear 20 or a decrease in the accuracy of torque transmission between the motor 58 and the external gear 20 do not occur readily. The rotational balance of the external gear 20 can consequently be maintained satisfactorily, and the reduction gear unit 102 having a high degree of response and rotational accuracy can be realized.

Consequently, the motored reduction gear transmission 100 can maintain better rotational balance of the external gear 20 and can output high torque with greater precision than when a controller is connected to each of the motors 57a-57d. Further, since the plurality of motors 57 are controlled by only a single controller 70, a low cost motored reduction gear transmission can be realized.

Next, the arrangement of the motors 57 will be described.

As shown in FIG. 1, the motors 57 are disposed such that their outer peripheries are disposed outside the cylinder shaped area extending from the center through hole 110 of the reduction gear unit 102 along the axial direction of the center through hole 110. Further, the motors 57 are disposed so that they are positioned within a cylinder shaped area extending along an outer peripheral surface of the internal gear 18. Wiring, tubing, etc. (not shown) can pass through the center through hole 110. Since respective motor 57 has a size allowing it to be housed as described above, the wiring, tubing, etc. can pass through the center through hole 110 without interfering with the motors 57. Further, the outer diameter of the entire motored reduction gear transmission 100 can be made less than or equal to the outer diameter of the internal gear 18.

In the present embodiment, the outer diameter of the internal gear 18 and the outer diameter of the carrier base 24 are equal. The outer diameter of the reduction gear unit 102 is determined by the outer diameter of the internal gear 18 (the outer diameter of the carrier base 24). If the motored reduction gear transmission 100 is equipped in another device, the motored reduction gear transmission 100 can be fitted with the other device by ensuring a hollow space having an outer diameter identical with the outer diameter of the internal gear 18. When the motored reduction gear transmission 100 is utilized e.g., in an industrial robot joint, the outer diameter of the joint can be identical with the outer diameter of the internal gear 18 of the reduction gear unit 102.

The motored reduction gear transmission 100 satisfies the following equation (1):

$$0.2 \leq d/D \leq 0.5 \qquad (1)$$

where d is the diameter of the center through hole 110, and D is an outer diameter of the internal gear 18. For example, in a reduction gear unit having the outer diameter of the internal gear 18 at 150mm, a hole having a diameter of maximally 30mm is generally needed for wiring, tubing, etc. to pass therethrough. If the outer diameter of the internal gear 18 increases, the size of the requisite hole increases proportionally. In the motored reduction gear transmission 100, since the diameter d of the center through hole 110 and the outer diameter D of the internal gear 18 have a relationship whereby $d/D \geq 0.2$, the wiring, tubing, etc. can reliably pass through the center through hole 110. Further, a motor 57 having a diameter of at least approximately 37mm is generally needed to drive the crankshaft 49 adequately in a reduction gear unit of which the outer diameter of the internal gear 18 is e.g., 150mm. When the outer diameter of the internal gear 18 increases (the size of the reduction gear unit increases), a motor 57 with a proportionally larger diameter must be utilized. When the relationship between the diameter d of the center through hole 110 and the outer diameter D of the internal gear 18 becomes $d/D > 0.5$, it becomes difficult to ensure space for disposing a motor 57 of the required size (approximately 25% or more of the outer diameter of the internal gear 18). As described above, the outer diameter of the motor 57 preferably does not project into the center through hole 110. Since the relationship of the diameter d of the center through hole 110 and the outer diameter D of the internal gear 18 satisfies $d/D < 0.5$ in the motored reduction gear transmission 100, the outer diameter of the motor 57 is disposed so as to be located outside the inner circumference surface of the center through hole 110, and the crankshaft 49 can be driven adequately.

(Second Embodiment)

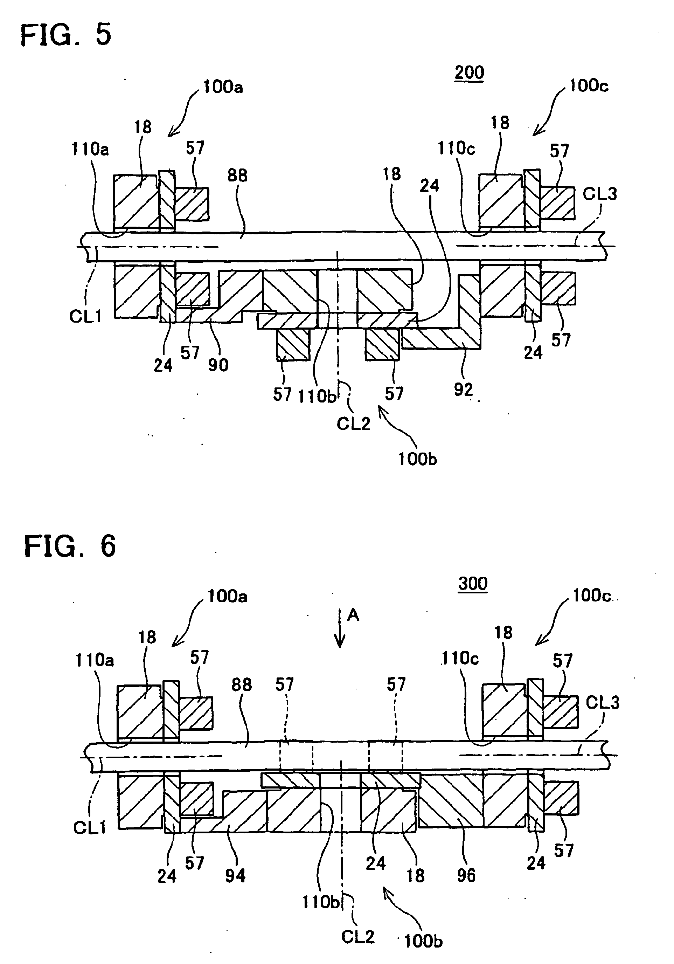

FIG. 5 shows a partial cross-sectional view of an industrial machine. This industrial machine is a wrist joint 200 of a multi-joint robot. The wrist joint 200 is connected to a lower arm (not shown) of the multi-joint robot. The wrist joint 200 has three degrees of freedom (i.e. three rotation axes). Three motored reduction gear transmissions 100 (100a, 100b, 100c) are disposed in the wrist joint 200. Each of the motored reduction gear transmissions realizes rotations around its respective rotation axis. Moreover, in FIG. 5, only the internal gear (output part) 18, the carrier base (fixed part) 24, and the motors 57 are shown of the motored reduction gear transmission 100, and the remaining members are omitted.

As shown in FIG. 5, the fixed part 24 of the first motored reduction gear transmission 100c is fixed to an output part of the lower arm (not shown). A fixed member 92 is fixed to the output part 18 of the first motored reduction gear transmission 100c. The fixed part 24 of the second motored reduction gear transmission 100b is fixed to the fixed member 92. Another fixed member 90 is fixed to the output part 18 of the second motored reduction gear transmission 100b. The fixed part 24 of the third motored reduction gear transmission 100a is fixed to the fixed member 90. Consequently, when the first motored reduction gear transmission 100c is driven, the third motored reduction gear transmission 100a and the second motored reduction gear transmission 100b rotate around an axis line CL3. When the second motored reduction gear transmission 100b is driven, the third motored reduction gear transmission 100a rotates around an axis line CL2. When the third motored reduction gear transmission 100a is driven, a robot hand (not shown) fixed to the output part 18 of the third motored reduction gear transmission 100a rotates around an axis line CL1. Wiring 88 passes through a center through hole 110c of the first motored reduction gear transmission 100c and a center through hole 110a of the third motored reduction gear transmission 100a.

As described above, all the motors 57 are disposed so that the outer peripheries thereof are disposed outside the cylinder shaped area extending from the center through hole 110 along the axial direction of the center through hole 110. Consequently, in the wrist joint 200, the wiring 88 can be passed through the center through holes 110a, 110c without interfering with any of the motors 57. Assembly of the multi-joint robot can be made easy by adopting the wrist joint 200. Further, since the motors 57 corresponding to the crankshafts 49 are connected to each of the crankshafts 49 (see FIG. 1) in the motored reduction gear transmission 100, high torque can be output using small motors. Since small motors have small inertia when driven, vibration does not readily occur. The operation of the multi-joint robot can be controlled accurately by adopting the motored reduction gear transmission 100 in the wrist joint 200.

(Third Embodiment)

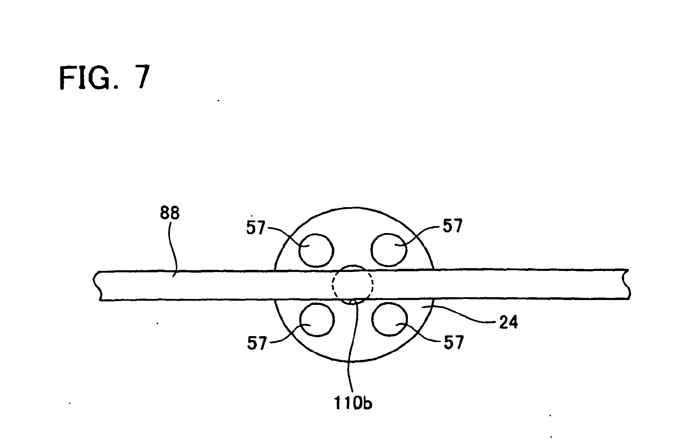

FIG. 6 shows a partial cross-sectional view of another industrial machine. This industrial machine is a wrist joint 300 of a multi-joint robot. FIG. 7 shows an outside drawing of a part of the wrist joint 300 viewed from the direction of the arrow A. The wrist joint 300 is a variant of the wrist joint 200, and components that are essentially the same as those of the wrist joint 200 have the same numbers applied thereto and an explanation thereof is omitted.
Viewed in the direction of the axis line CL2, in the wrist joint 200, the motors 57 of the motored reduction gear transmission 100 are disposed outside the wrist joint 200 (at the side opposite the wiring 88). However, in the wrist joint 300, the motors 57 of the second motored reduction gear transmission 100b are disposed inside the wrist joint 300 (at the wiring 88 side). The size of the wrist joint 300 in the axis line CL2 direction can be made more compact than the wrist joint 200.
In the wrist joint 300, a fixed member 96 is fixed to the output part 18 of the first motored reduction gear transmission 100c. The fixed part 24 of the second motored reduction gear transmission 100b is fixed to the fixed member 96. A fixed member 94 is fixed to the output part 18 of the second motored reduction gear transmission 100b. The fixed part 24 of the first motored reduction gear transmission 100a is fixed to the fixed member 94. The wrist joint 300 operates in the same manner as the wrist joint 200.
Further, as shown in FIG. 7, each motor 57 is disposed so that its outer periphery is disposed outside the center through hole 110. Consequently, the wiring 88 does not interfere with any of the motors 57 even if the motors 57 are disposed inside the wrist joint 300.
The multi-joint robot has a plurality of wrist joints, and the three motored reduction gear transmissions 100 (100a, 100b, 100c) are disposed in the wrist joints 200. However, a joint other than the wrist joint of a multi-joint robot can be driven by the motored reduction gear transmission 100.
Specific embodiments of the present teachings are described above in detail, but these merely illustrate some possibilities of the present invention and do not restrict the scope of the claims. The art set forth in the claims includes variations and modifications of the specific examples set forth above.
Examples have been described in the above embodiments that the internal gear is the output part, and the carrier is the fixed part (the part fixed to the base). Alternately, the carrier may be the output part, and the internal gear may be the fixed part. In this case, the internal gear is fixed to the base. The carrier thereby rotates with respect to the base.
In the above embodiments, the motors are disposed so that the outer peripheries thereof are disposed inside a cylinder shaped area extending along an axial direction from the outer peripheral surface of the internal gear. However, a motor may be utilized having the outer periphery disposed outside the cylinder shaped area extending along the axial direction from the outer peripheral surface of the internal gear. Since the diameter of this motor can be increased, a high torque motor can be utilized. This motor can be selected in accordance with the required motor torque and the shape of a base of another device to which the motored reduction gear transmission is fixed.
In the above embodiments, the encoder connects to one of the motors, and the brakes connect to the other motors. However, the encoder may connect to two or more motors, and the brakes may connect to the other motors. The rotation angle of the motors will thereby be detected with even greater accuracy. This modification can be made in accordance with the motor braking force required and the accuracy required in detecting the rotation angle of the motor. Further, both the encoder and the brake may connect to the motor. The accuracy in detecting the rotation angle of the motor is thereby increased, and the braking force of the motor is also increased. This is also an effective measure when there is surplus space in the axial direction of the motored reduction gear transmission, etc.
Further, the number of second through holes is not restricted to the number in the above embodiments. The number of second through holes can be changed in accordance with the number of required crankshafts, the number of carriers to be passed through the second through holes, or the area.
Further, the motored reduction gear transmission of the above embodiments can also be applied to a swing device of an industrial machine, such as a turret or indexing table of an NC lathe, etc. A compact and precise swing device can thereby be realized.
The technical elements disclosed in the specification or the drawings may be utilized separately or in all types of combinations, and are not limited to the combinations set forth in the claims at the time of filing of the application. Furthermore, the technology illustrated in the present specification or the drawings may simultaneously achieve a plurality of objects, and has technological utility by achieving one of those objects.

**Claims**

1.   A motored reduction gear transmission comprising:

　　　a reduction gear unit (102); and
　　　wherein the reduction gear unit (102) comprises:

an internal gear (18) having a ring shape;
an external gear (20X, 20Y) configured to rotate eccentrically inside the internal gear (18) around an axis line (18M) of the internal gear (18), the external gear (20X, 20Y) having a first through hole (60X, 60Y) at a center and a plurality of second through holes (68a, 68b, 68c, 68d, 68e, 68f, 68g, 68h) arranged around the first through hole (60X, 60Y);
a plurality of crankshafts (49), each crankshaft (49) having an eccentric body (50X, 50Y) offset from an axis line of the crankshaft (49), and each of the eccentric bodies (50X, 50Y) of the plurality of crankshafts (49) being engaged with each of the second through holes (68a, 68c, 68e, 68g) respectively; and
a center though hole (110) passing from a base side of the reduction gear unit (102) to an output side of the reduction gear unit (102) through the first through hole (60X, 60Y), the center through hole (110) encompassing the axis line (18M) of the internal gear (18); **characterized in that** the motored reduction gear comprises:

a plurality of motors (57a, 57b, 57c, 57d), the number of motors being the same as the number of crankshafts,
wherein each of the plurality of motors (57a, 57b, 57c, 57d) has an output shaft (56) connected to one of the plurality of crankshafts (49), and is disposed so that an outer periphery of each motor (57a, 57b, 57c, 57d) is disposed outside a cylinder shaped area extending from the center through hole (110) of the reduction gear unit (102) along an axial direction of the center through hole (102),
at least one of the plurality of motors (57a, 57b, 57c, 57d) connects to an angle detector (26) that detects a rotation angle of the motor (57a, 57b, 57c, 57d).

2. The motored reduction gear transmission (100) of claim 1, wherein
the plurality of motors (57a, 57b, 57c, 57d) is driven by one torque command signal that is output from one motor-controller (70).

3. The motored reduction gear transmission (100) of claim 2, wherein
all of the plurality of motors (57a, 57b, 57c, 57d) have same torque characteristics.

4. The motored reduction gear transmission (100) of any one of claims 1 to 3, wherein
a brake (28a, 28b, 28c) is connected only to a motor (57d) that does not connect to any angle detector (26) among the plurality of motors (57a, 57b, 57c, 57d).

5. The motored reduction gear transmission (100) of claim 1, wherein
each of the plurality of motors (57a, 57b, 57c, 57d) has an outer diameter by which the motor (57a, 57b, 57c, 57d) can be positioned within a cylinder shaped area extending from the internal gear (18) along an axial direction of the internal gear (18).

6. The motored reduction gear transmission of claim 5, wherein
the motored gear transmission (100) satisfies an equation (1):

$$0.2 \leq d/D \leq 0.5 \qquad (1)$$

where d is an inner diameter of the center through hole (110), and D is an outer diameter of the internal gear (18).

7. An industrial machine (200, 300) comprising:

a swing device driven by a motored reduction gear transmission (100) of any one of claims 1 to 6.

**Patentansprüche**

1. Motorbetriebenes Untersetzungsgetriebe mit:

einer Untersetzungsgetriebeeinheit (102); und wobei die Untersetzungsgetriebeeinheit (102) aufweist:

ein ringförmiges Innenzahnrad (18);

ein Außenzahnrad (20X, 20Y), das dafür konfiguriert ist, sich im Inneren des Innenzahnrades (18) um eine Achsenlinie (18M) des Innenzahnrades (18) exzentrisch zu drehen, wobei das Außenzahnrad (20X, 20Y) ein erstes Durchgangsloch (60X, 60Y) an einer Mitte und mehrere um das erste Durchgangsloch (60X, 60Y) herum angeordnete zweite Durchgangslöcher (68a, 68b, 68c, 68d, 68e, 68f, 68g, 68h) aufweist;

mehrere Kurbelwellen (49), wobei jede Kurbelwelle (49) einen exzentrischen Körper (50X, 50Y) aufweist, der von einer Achsenlinie der Kurbelwelle (49) versetzt ist, und wobei jeder der exzentrischen Körper (50X, 50Y) der mehreren Kurbelwellen (49) mit entsprechenden der zweiten Durchgangslöcher (68a, 68c, 68e, 68g) in Eingriff steht; und

eine mittige Durchgangsöffnung (110), die sich von einer Basisseite der Untersetzungsgetriebeeinheit (102) durch das erste Durchgangsloch (60X, 60Y) zu einer Abtriebsseite der Untersetzungsgetriebeeinheit (102) erstreckt, wobei die mittige Durchgangsöffnung (110) die Achsenlinie (18M) des Innenzahnrades (18) umschließt;

**dadurch gekennzeichnet, dass** das motorbetriebene Untersetzungsgetriebe aufweist:

mehrere Motoren (57a, 57b, 57c, 57d), wobei die Anzahl der Motoren der Anzahl der Kurbelwellen gleicht;

wobei jeder der mehreren Motoren (57a, 57b, 57c, 57d) eine mit einer der mehreren Kurbelwellen (49) verbundene Ausgangswelle (56) aufweist und derart angeordnet ist, dass ein Außenumfang jedes Motors (57a, 57b, 57c, 57d) außerhalb eines zylinderförmigen Bereichs angeordnet ist, der sich von der mittigen Durchgangsöffnung (110) der Untersetzungsgetriebeeinheit (102) entlang einer axialen Richtung der mittigen Durchgangsöffnung (102) erstreckt;

wobei mindestens einer der mehreren Motoren (57a, 57b, 57c, 57d) mit einem Winkeldetektor (26) verbunden ist, der einen Drehwinkel des Motors (57a, 57b, 57c, 57d) erfasst.

2. Motorbetriebenes Untersetzungsgetriebe (100) nach Anspruch 1, wobei
die mehreren Motoren (57a, 57b, 57c, 57d) durch ein von einer Motorsteuerung (70) ausgegebenes Drehmomentbefehlssignal angesteuert werden.

3. Motorbetriebenes Untersetzungsgetriebe (100) nach Anspruch 2, wobei
die mehreren Motoren (57a, 57b, 57c, 57d) jeweils die gleichen Drehmomentkenngrößen aufweisen.

4. Motorbetriebenes Untersetzungsgetriebe (100) nach einem der Ansprüche 1 bis 3, wobei
eine Bremse (28a, 28b, 28c) mit nur einem Motor (57d) der mehreren Motoren (57a, 57b, 57c, 57d) verbunden ist, der mit keinem Winkeldetektor (26) verbunden ist.

5. Motorbetriebenes Untersetzungsgetriebe (100) nach Anspruch 1, wobei
jeder der mehreren Motoren (57a, 57b, 57c, 57d) einen derartigen Außendurchmesser aufweist, dass der Motor (57a, 57b, 57c, 57d) innerhalb eines zylinderförmigen Bereichs angeordnet werden kann, der sich vom Innenzahnrad (18) entlang einer axialen Richtung des Innenzahnrades (18) erstreckt.

6. Motorbetriebenes Untersetzungsgetriebe (100) nach Anspruch 5, wobei
das motorbetriebene Getriebe (100) die Beziehung (1)

$$0,2 \le d/D \le 0,5 \qquad\qquad (1)$$

erfüllt, wobei d einen Innendurchmesser der mittigen Durchgangsöffnung (110) und D einen Außendurchmesser des Innenzahnrades (18) bezeichnen.

7. Industriemaschine (200, 300), mit:

einer Schwenkeinrichtung, die durch ein motorbetriebenes Untersetzungsgetriebe (100) nach einem der Ansprüche 1 bis 6 angetrieben wird.

**Revendications**

1. Transmission par engrenages réducteurs motorisés comprenant:

   une unité d'engrenages réducteurs (102); et
   dans laquelle l'unité d'engrenages réducteurs (102) comprend:

   un engrenage interne (18) ayant une forme annulaire;
   un engrenage externe (20X, 20Y) configuré pour tourner de manière excentrique à l'intérieur de l'engrenage interne (18) autour d'une ligne axiale (18M) de l'engrenage interne (18), l'engrenage externe (20X, 20Y) ayant un premier trou de passage (60X, 60Y) au niveau d'un centre et une pluralité de deuxièmes trous de passage (68a, 68b, 68c, 68d, 68e, 68f, 68g, 68h) agencés autour du premier trou de passage (60X, 60Y);
   une pluralité de vilebrequins (49), chaque vilebrequin (49) ayant un corps excentrique (50X, 50Y) décalé par rapport à une ligne axiale du vilebrequin (49), et chacun des corps excentriques (50X, 50Y) de la pluralité de vilebrequins (49) étant mis en prise avec chacun des deuxièmes trous de passage (68a, 68c, 68e, 68g) respectivement; et
   un trou de passage central (110) passant d'un côté de base de l'unité d'engrenages réducteurs (102) à un côté de sortie de l'unité d'engrenages réducteurs (102), par le premier trou de passage (60X, 60Y), le trou de passage central (110) englobant la ligne axiale (18M) de l'engrenage interne (18); **caractérisée en ce que** l'engrenage réducteur motorisé comprend:

   une pluralité de moteurs (57a, 57b, 57c, 57d), le nombre de moteurs étant le même que le nombre de vilebrequins,
   dans laquelle chaque moteur de la pluralité de moteurs (57a, 57b, 57c, 57d) a un arbre de sortie (56) raccordé à un vilebrequin de la pluralité de vilebrequins (49) et est disposé de sorte qu'une périphérie externe de chaque moteur (57a, 57b, 57c, 57d) est disposée à l'extérieur d'une zone de forme cylindrique s'étendant à partir du trou de passage central (110) de l'unité d'engrenages réducteurs (102) le long d'une direction axiale du trou de passage central (102),
   au moins un moteur de la pluralité de moteurs (57a, 57b, 57c, 57d) se raccorde à un détecteur d'angle (26) qui détecte un angle de rotation du moteur (57a, 57b, 57c, 57d).

2. Transmission par engrenages réducteurs motorisés (100) selon la revendication 1, dans laquelle la pluralité de moteurs (57a, 57b, 57c, 57d) est entraînée par un signal de commande de couple qui est produit à partir d'un contrôleur de moteur (70).

3. Transmission par engrenages réducteurs motorisés (100) selon la revendication 2, dans laquelle tous les moteurs de la pluralité de moteurs (57a, 57b, 57c, 57d) ont les mêmes caractéristiques de couple.

4. Transmission par engrenages réducteurs motorisés (100) selon l'une quelconque des revendications 1 à 3, dans laquelle un frein (28a, 28b, 28c) est raccordé uniquement à un moteur (57d) qui ne se raccorde à aucun détecteur d'angle (26) parmi la pluralité de moteurs (57a, 57b, 57c, 57d).

5. Transmission par engrenages réducteurs motorisés (100) selon la revendication 1, dans laquelle chaque moteur de la pluralité de moteurs (57a, 57b, 57c, 57d) a un diamètre externe grâce auquel le moteur (57a, 57b, 57c, 57d) peut être positionné à l'intérieur d'une zone de forme cylindrique s'étendant à partir de l'engrenage interne (18) le long d'une direction axiale de l'engrenage interne (18).

6. Transmission par engrenages réducteurs motorisés selon la revendication 5, dans laquelle la transmission par engrenages motorisés (100) satisfait une équation (1) :

$$0{,}2 \leq d/D \leq 0{,}5 \qquad (1)$$

où d est un diamètre interne du trou de passage central (110) et D est un diamètre externe de l'engrenage interne (18).

7. Machine industrielle (200, 300) comprenant:

un dispositif oscillant entraîné par une transmission par engrenages réducteurs motorisés (100) selon l'une quelconque des revendications 1 à 6.

# FIG. 1

EP 2 169 263 B1

FIG. 2

FIG. 3

# FIG. 4

# FIG. 5

# FIG. 6

# FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006046664 A

- JP 08226498 A